# EUROPEAN PATENT APPLICATION

(11) **EP 3 501 675 A1**
(43) Date of publication of application: **26.06.2019**
(21) Application number: 18214345.3
(22) Date of filing: 20.12.2018
(51) Int. Cl.: B08B 9/045, B08B 9/043, E03F 9/00, F16L 55/40

(54) **A CLEANING DEVICE FOR INTERNAL CLEANING OF DRAIN OR SEWER PIPES**

(30) Priority: 21.12.2017 FI 20176143
(71) Applicant: Boldan Oy, 05200 Rajamäki (FI)
(72) Inventor: SCHNEIDER, Steffen, 76703 KRAICHTAL-MÜNZESHEIM (DE)
(74) Representative: Berggren Oy, Helsinki & Oulu

(57) **Abstract**

The invention relates to a cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends. At least some of the chain links (10) of at least one chain (25) of the cleaning device (20) have a blade pin (15) with blade parts (16) at each end of the blade pin (15), the blade pin (15) extends through an internal opening (17) of the chain link (10) and the blade parts (16) are of hard material.

## Description

The invention relates to a cleaning device for the internal cleaning of drain or sewer pipes. More particularly the invention relates to the cleaning device for the cleaning of drain or sewer pipes according to the preamble of the independent cleaning device claim.

It is known that in maintenance and repair work of drain or sewer pipes and in coating of inner surfaces of drain or sewer pipes and in installing renovation liners inside drain or sewer pipes one important part of the work is to clean the inner surfaces of the drain or sewer pipes to remove any material impurity deposits, for example rust, grease, lime, dirt, crusts and scales. Removal of impurities has been accomplished by the use of cleaning devices comprising a tool, for example steel chains attached to a rotatable arm or cable or wire rope or like. Thus the chains are rotated to centrifugally inside the drain or sewer pipe such that at least part of the chain contacts the inner surface of the drain or sewer pipe and thus the impurities are detached and removed from the inner surfaces and flushed away by means of liquid, typically water flow from the drain or sewer pipe. The chains are rotated by a motor or corresponding means. Thus the cleaning internally of the drain or sewer pipes by the cleaning device is accomplished by rotating a tool by means of the wire rope or the equivalent inside the drain. The tool, i.e. the chain or chains of the cleaning device are formed of links connected together as known from common chain structures, for example of snow chains or lifting chains. The chains can also include claws bent from the chain known of snow chains. A problem is that the chains are not particularly sharp and have a limited wear life. By failing to provide sharp edges, the chains tend to be unable to detach all impurities. A problem of the cleaning devices known form prior art is that the cleaning chains are of similar material of their durability as the drain or sewer pipe itself and therefore the cleaning device is not efficient for all cleaning purposes, especially if the impurities have strong adherence to the inner surface of the drain or the sewer pipe. A disadvantage has also been short life time of the chains.

In US patent publication 9649671 is disclosed a cleaning device for the internal cleaning of drainpipes, including one or more chains including several links, and on one or more sides of one or more links is fastened one or more hard metal blades, which are soldered or welded fast to the link. The fastening of the blades to each link of the chain requires a lot of manufacturing work. In some cases, also problems have occurred as the blades have come loose from the link.

An object of the present invention is to provide an improved cleaning device for the internal cleaning of drain or sewer pipes, in which the problems and disadvantages of cleaning devices known from prior art are eliminated or at least minimized.

An object of the present invention is to provide a method of manufacturing a chain for a cleaning device for the internal cleaning of drain or sewer pipes, in which the problems and disadvantages of the manufacturing methods known from prior art are eliminated or at least minimized.

An object of the invention is to introduce a cleaning device which is effective in cleaning and has a long life time.

In order to achieve the above objects and those that will come apparent later the cleaning device according to the invention is characterized by the features of the characterizing part of independent cleaning device claim. Advantageous embodiments and features are defined in dependent claims.

According to the invention the cleaning device for internal cleaning of drain or sewer pipes comprising at least one chain with several chain links, two end parts, to one of which one end of the chain/chains is/are fastened and to another of which another end of the chain/chains is fastened, which end parts each comprise a central opening, through which a rotatable element extends, wherein at least some of the chain links of at least one chain of the cleaning device have a blade pin with blade parts at each end of the blade pin, the blade pin extends through an internal opening of the chain link and the blade parts are of hard material.

According to an advantageous feature of the invention the blade parts are of hard metal. The material of the blade parts is advantageously tungsten carbide. The material of the blade parts can also be for example PCD, diamond segments, diamond granules, tungsten carbide granules.

According to an advantageous feature of the invention the cleaning device comprises 1 - 6 chains.

According to an advantageous feature of the invention blade pin has an outwards widening form such that the blade parts of the blade pin are larger than the link opening such that the blade pin cannot itself detach from the link opening.

According to an advantageous feature of the invention the blade parts have a round or angular or oval form.

According to an advantageous feature of the invention hardness of the hard material is at least 300 HB.

According to an advantageous example of the invention the blade parts are formed as parts of the blade pin.

According to an advantageous example of the invention the blade parts are separate parts of the blade pin fastened to the blade pin by welding, soldering, screw fastening or by other fastening means.

According to an advantageous feature of the invention ends of the chain/chains is/are attached to the corresponding end parts by welding.

The invention is applicable in many different types of sewer and drain pipes with various diameters and a cleaning device with many advantages is achieved. Cleaning device for the internal cleaning of drain or sewer pipes according to the invention and its advantageous features provides for efficient cleaning due to the blade pins of the chain links and has a long life time and good durability due to the hard material of the blade parts. Also cleaning zone of each chain is wider and more uniform as the blade pins and/or blade parts provide for the cleaning effect. Manufacturing of the chains for the cleaning device is work saving and cost effective as there is no need for separate fastening welding of the blades. Further the lifetime will be longer as each blade pin and/or blade part has large wear surface. The blade pins and/or blade parts are also easy replace, if needed. Additionally, clogging risks of drain and sewer pipes will decrease as the cleaning zone is wider due to the large cleaning surface of the blade parts and/or blade pins and thus impurities and like on the inner surfaces of the drain and sewer pipes will be more effectively removed.

In the following the invention is described in more detail by reference to the accompanying drawing in which
Fig. 1 shows schematically a simplified example of a cleaning device according to the invention,
Fig. 2A - 2B show schematically simplified examples of a part of a chain of a cleaning device for internal cleaning of drain or sewer pipes according to the invention,
Fig. 3 shows schematically a simplified example of a cleaning device according to the invention in a drain or a sewer pipe.

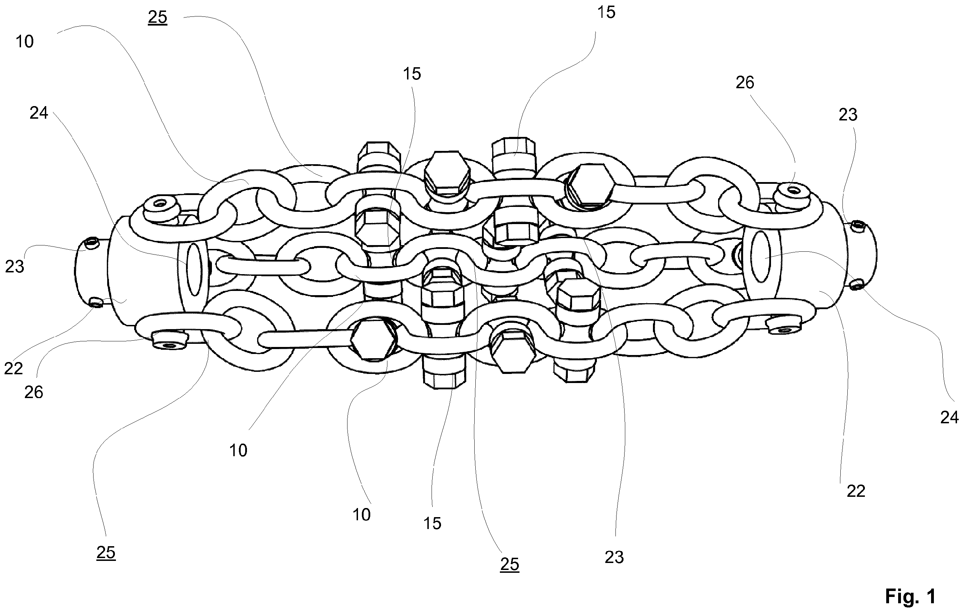

During the course of the following description of the figures 1 - 3 corresponding reference numbers and signs will be used to identify corresponding elements, parts and part components unless otherwise mentioned. In the figures some references sign have not been repeated for clarity reasons.

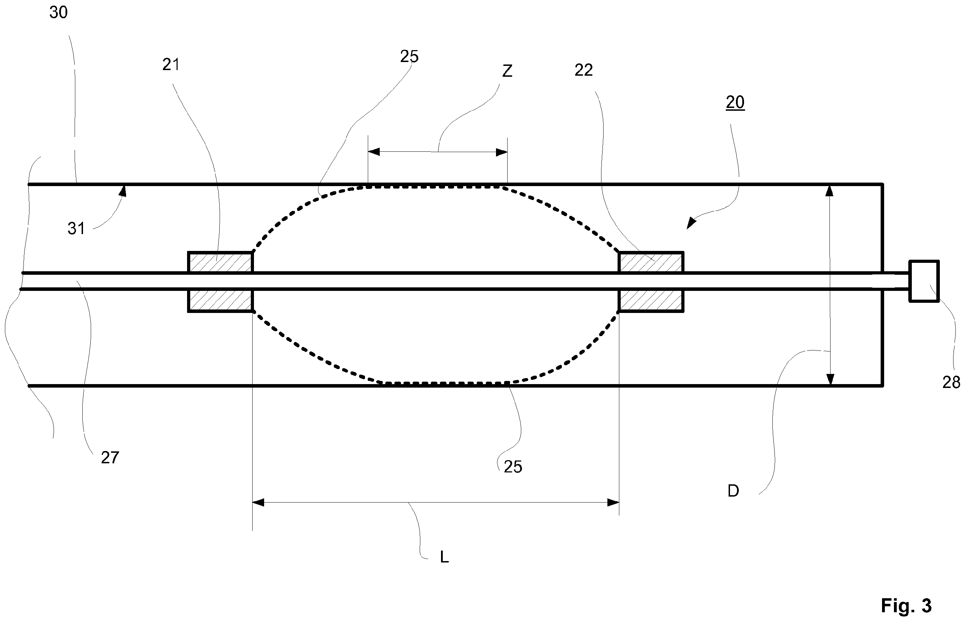

In figure 1 is shown schematically a simplified example of a cleaning device 20 comprising one or more chains 25 formed of several chain links 10. In the example of the figure 1 the cleaning device 20 comprises three chains 25. The cleaning device 20 comprises at least one chain 25, advantageously one to six chains 25. The cleaning device also comprises two end parts 22 in between of which the chains 25 extend and to which end parts 22 respectively each end of each chain 25 is fastened, for example by welding or by screw fastening. In the example of figure 1 the ends of the claims are attached to the end parts by attaching the uttermost chain links 10 of each chain 25 to the corresponding end part by screws 26. The end parts 22 comprise a central through opening 24, through which the rotatable wire rope or rotatable arm or rotatable cable or like rotatable element 27 extends, figure 3. The end part 22 also comprises at least one screw 23 that extends to the through opening 24 for fastening the end part 22 to the desired location on the rotatable element 27 so that the end parts 22 are at required distance L from each other on the rotatable element 27 and that the end part 22 is fastened non-rotatably in the rotatable element 27, figure 3. In at least one of the chain links 10 of at least one of the chains 25 a blade pin 15 has been located to extend through link opening 17 of the chain link 10. Advantageously each chain 25 comprises several blade pins 15 each located in the corresponding link opening 17 of the chain links 10. The chain links 10 are connected to each other by pressing opened loops to closed loops after the blade pins 15 have been inserted so that the loops will not allow the chain links 10 to detach, whereby the chain 25 is formed. The blade pins 15 have an outwards widening form such that the ends i.e. blade parts 16 of the blade pin are larger than the link opening 17 such that the blade pin 15 cannot itself detach from the link opening 17. The part of each blade pin 15 located in the link opening 17 is smaller than the link opening such that the blade pin 17 can move within the link opening 15 as allowed by the distance between the blade parts 16.

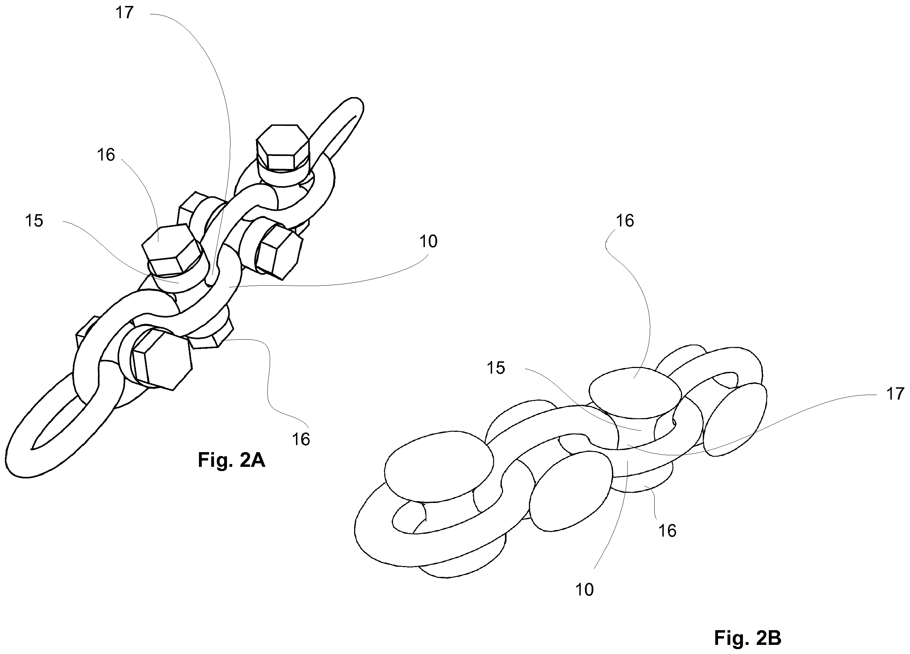

In figure 2A is shown schematically a simplified example of a part of a chain 25 with chain links 10 comprising through link opening 17 positioned blade pins 15. In this example each blade pin 15 comprises at each end a separate blade part 16, which is fastened to the blade pin 15 by welding, soldering, screw fastening or by other fastening means. In this example the blade parts 16 have a hexagonal outer form but the form can vary, it can be round, angular, oval etc.

In figure 2B is shown schematically a simplified example of a part of a chain 25 with a chain links 10 comprising through link opening 17 positioned blade pins 15. In this example each blade pin 15 comprises at each end a blade part 16, which is formed as part of the blade pin 15. In this example the blade parts 16 have a round form but the form can vary, it can be angular, oval etc.

The blade parts 16 are of hard material, advantageously hard metal, more advantageously tungsten carbide, which hard material has advantageously hardness of at least 300 HB. The blade pins 15 can be of hard metal or of other material, such as for example PCD, diamond segments, diamond granules, tungsten carbide granules.

In figure 3 is shown schematically a simplified example of the cleaning device 20 in a drain or a sewer pipe 30. The cleaning device 20 is located inside the pipe 30 such that the chains 25 during rotating the rotatable element 27 contact inner surface 31 of the pipe 30 at cleaning zone Z. The rotatable element 17 is connected to a rotating means 28, for example a rotating motor or rotating drive or pneumatic rotating means. The rotatable element 27 extends through the openings 24, figure 1, of the end parts 22. The end parts 22 are fastened to the desired location on the rotatable by the screws 23, figure 1, so that the end parts 22 are at required distance L from each other on the rotatable element 27, figure 3. The rotatable element 27 is moved in the pipe 30 in its axial direction so that the cleaning zone Z can be moved along the length of the pipe 30. By adjusting the distance L between the end parts 22 the circumferential location of the chains 25 can be adjusted to correspond the inner diameter D of the pipe 30 such that desired cleaning effect and length of the cleaning zone Z is achieved.

The invention is applicable in many different types of drain and sewer pipes of wide range of diameters.

### Reference signs used in the drawing

10 chain link
15 blade pin
16 blade part
17 link opening
20 cleaning device
22 end part
23 screw
24 end part
25 chain
26 screw
27 wire rope
28 rotating means
30 pipe
31 inner surface of the pipe
D diameter
L distance
Z zone

## Claims

1. A cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends, **characterized in that** at least some of the chain links (10) of at least one chain (25) of the cleaning device (20) have a blade pin (15) with blade parts (16) at each end of the blade pin (15), that the blade pin (15) extends through an internal opening (17) of the chain link (10) and that the blade parts (16) are of hard material.

2. Cleaning device according to claim 1, **characterized in that** the cleaning device (20) comprises at least three chains (25).

3. Cleaning device according to claim 1 or 2, **characterized in that** the cleaning device (20) comprises 1 - 6 chains (25).

4. Cleaning device according to any of claims 1 - 3, **characterized in that** the blade pin (15) has an outwards widening form such that the blade parts (16) of the blade pin (15) are larger than the link opening 17 such that the blade pin (15) cannot itself detach from the link opening (17).

5. Cleaning device according to any of previous claims, **characterized in that** the blade parts (16) have a round or angular or oval form.

6. Cleaning device according to any of previous claims, **characterized in that** hardness of the hard material is at least 300 HB.

7. Cleaning device according to any of previous claims, **characterized in that** the hard material is hard metal, advantageously tungsten carbide.

8. Cleaning device according to any of previous claims 1 - 7, **characterized in that** the blade parts (16) are formed as parts of the blade pin (15).

9. Cleaning device according to any of previous claims 1 - 7, **characterized in that** the blade parts (16) are separate parts of the blade pin (15) fastened to the blade pin (15) by welding, soldering, screw fastening or by other fastening means.

10. Cleaning device according to any of previous claims, **characterized in that** ends of the chain/chains (25) is/are attached to the corresponding end parts (22) by welding or by screw fastening.
